# EUROPEAN PATENT APPLICATION

(11) **EP 3 346 679 A1**
(43) Date of publication of application: **11.07.2018**
(21) Application number: 16842144.4
(22) Date of filing: 12.08.2016
(51) Int. Cl.: H04M 1/725, G01S 1/02, G06F 3/0346, G06Q 30/02, H04W 4/02

(54) **METHOD, USER TERMINAL, SERVICE SERVER, AND COMPENSATION SERVER FOR RESTRICTING OPERATION OF USER TERMINAL WHILE WALKING OR DRIVING**

(30) Priority: 01.09.2015 KR 20150124752; 18.09.2015 KR 20150132155
(71) Applicant: Yu, Seong Hun, Suwon-si, Gyeonggi-do 16554 (KR)
(72) Inventor: Yu, Seong Hun, Suwon-si, Gyeonggi-do 16554 (KR)
(74) Representative: Klunker IP Patentanwälte PartG mbB
(86) International application number: PCT/KR2016/008928
(87) International publication number: WO 2017/039178

(57) **Abstract**

According to an aspect of the present invention, a method for restricting an operation of a user terminal while walking or driving is provided, the method comprising the steps of: (a) acquiring at least a part of information on the number of steps per unit time of a user carrying the user terminal, information on the location of the user terminal, and information on the moving speed of the user terminal, and when it is determined that the number of steps per unit time or the moving speed is out of a predetermined range, or the user is at a specific location, placing, by the user terminal, restrictions on the operation of a specific function of the user terminal; and (b) transmitting, by the user terminal, information on the restrictions placed on the operation of the specific function to a compensation server, or supporting a service server to transmit the information to the compensation server, so that the compensation server compensates the user for the restrictions placed on the operation of the specific function, according to the degree of placing restrictions on the operation of the specific function.

## Description

The present invention relates to a method for limiting at least part of functions of a user device of a user when the user is walking or driving; and more particularly, to the method of the user device (a) limiting an operation of its specific function if at least some of information on a step count by unit time of the user carrying the user device, on at least one location of the user device, and on at least one moving speed of the user device is acquired, and then if at least one of the step count by unit time and the moving speed is determined as exceeding its corresponding threshold or if the location of the user device is determined as at least one of predetermined locations and transmitting information on having limited the operation of the specific function to a reward server or supporting a service server to transmit the information on having limited the operation of the specific function to thereby allow a reward to be provided to the user by referring to a degree of having limited the operation.

Due to the wide spread of mobile devices, more users are using the mobile devices while walking or driving. However, as the use of the mobile devices while walking or driving may cause serious accidents, legal regulations to restrain such actions are in order.

However, there is a limit in prohibiting, only with regulations, people from using their mobile devices while walking or driving because it is difficult to monitor and restrain users who use their mobile devices while walking or driving.

Accordingly, a more technical plan for prohibiting people from using the mobile devices while walking or driving is required.

In addition, if usage of the mobile devices is simply prohibited by using a certain technology, the users may suffer from inconvenience and this might hinder use of service. Therefore, a plan for voluntary participation of the users should be considered.

It is an object of the present invention to solve all problems explained above.

It is another object of the present invention to provide detailed methods for guiding a user to voluntarily participate in a service for limiting functions of a mobile device as well as technical methods for prohibiting the user from using the mobile device while walking or driving.

It is still another object of the present invention to learn information on accumulated logs of the mobile device while walking or driving, and create user customized information based on the information on the accumulated logs, to thereby provide the user customized information to the user.

In accordance with one aspect of the present invention, there is provided a method for limiting at least part of functions of a user device of a user when the user is walking or driving, including steps of: (a) the user device, limiting an operation of its specific function if at least some of information on a step count by unit time of the user carrying the user device, on at least one location of the user device, and on at least one moving speed of the user device is acquired, and then if at least one of the step count by unit time and the moving speed is determined as exceeding its corresponding threshold or if the location of the user device is determined as at least one of predetermined locations; and (b) the user device transmitting information on having limited the operation of the specific function to a reward server or supporting a service server to transmit the information on having limited the operation of the specific function to thereby allow a reward to be provided to the user by referring to a degree of having limited the operation.

In accordance with another aspect of the present invention, there is provided a method for limiting at least part of functions of a user device of a user when the user is walking or driving, including steps of: (a) a reward server, if at least some of information on a step count by unit time of the user carrying the user device, on at least one location of the user device and on at least one moving speed of the user device is acquired, and then if at least one of the step count by unit time and the moving speed is determined as exceeding its corresponding threshold, or if the location of the user device is determined as at least one of predetermined locations so that an operation of a specific function of the user device is limited, acquiring information on having limited the operation of the specific function; and (b) the reward server creating reward information for the user by referring to a degree of having limited the operation acquired at the step of (a).

In accordance with still another aspect of the present invention, there is provided a method for limiting at least part of functions of a user device of a user when the user is walking or driving, including steps of: (a) a service server supporting the user device to limit an operation of its specific function if at least some of information on a step count by unit time of the user carrying the user device, on at least one location of the user device and on at least one moving speed of the user device is acquired, and then if at least one of the step count by unit time and the moving speed is determined as exceeding its corresponding threshold or if the location of the user device is determined as at least one of predetermined locations; and (b) the service server transmitting information on having limited the operation of the specific function to a reward server or supporting the user device to transmit the information on having limited the operation to thereby allow a reward to be provided to the user by referring to a degree of having limited the operation.

In accordance with still yet another aspect of the present invention, there is provided a user device for limiting at least part of functions of the user device of a user when the user is walking or driving, including: a processor for limiting an operation of a specific function of the user device (i) if at least some of information on a step count by unit time of the user carrying the user device, on at least one location of the user device, and on at least one moving speed of the user device is acquired, and then (ii) if at least one of the step count by unit time and the moving speed is determined as exceeding its corresponding threshold or if the location of the user device is determined as at least one of predetermined locations; and a communication part for transmitting information on having limited the operation of the specific function to a reward server or supporting a service server to transmit the information on having limited the operation of the specific function to thereby allow a reward to be provided to the user by referring to a degree of having limited the operation.

In accordance with still yet another aspect of the present invention, there is provided a reward server for limiting at least part of functions of a user device of a user when the user is walking or driving, including: a communication part for acquiring information on having limited an operation of a specific function (i) if at least some of information on a step count by unit time of the user carrying the user device, on at least one location of the user device and on at least one moving speed of the user device is acquired, and then (ii) if at least one of the step count by unit time and the moving speed is determined as exceeding its corresponding threshold, or if the location of the user device is determined as at least one of predetermined locations so that the operation of the specific function of the user device is limited; and a database managing part for creating and storing reward information for the user by referring to a degree of having limited the operation of the specific function.

In accordance with still yet another aspect of the present invention, there is provided a service server for limiting at least part of functions of a user device of a user when the user is walking or driving, including: a processor for supporting the user device to limit an operation of its specific function (i) if at least some of information on a step count by unit time of the user carrying the user device, on at least one location of the user device and on at least one moving speed of the user device is acquired, and then (ii) if at least one of the step count by unit time and the moving speed is determined as exceeding its corresponding threshold or if the location of the user device is determined as at least one of predetermined locations; and a communication part for transmitting information on having limited the operation of the specific function to a reward server or supporting the user device to transmit the information on having limited the operation to thereby allow a reward to be provided to the user by referring to a degree of having limited the operation.

The drawings attached below to explain example embodiments of the present invention are only part of example embodiments of the present invention and other drawings may be obtained based on the drawings without inventive work for those skilled in the art:
Fig. 1 is a conceptual drawing schematically illustrating an operation of a system for limiting an operation of a function of a user device in accordance with one example embodiment of the present invention.
Fig. 2 is a block diagram schematically illustrating a configuration of the user device in accordance with one example embodiment of the present invention.
Fig. 3 is a drawing illustrating an example embodiment of limiting the operation of the function of the user device while its user is walking, based on information on a location or a moving speed of the user device by using a beacon.
Fig. 4 is a drawing illustrating an example embodiment of limiting the operation of the function of the user device while its user is driving a vehicle, based on information on the location or the moving speed of the user device by using the beacon.
Fig. 5 is a block diagram illustrating a configuration of a service server in accordance with one example embodiment of the present invention.
Fig. 6 is a block diagram illustrating a configuration of a reward server in accordance with one example embodiment of the present invention.

Detailed explanations of the present invention explained below refer to attached drawings that illustrate specific embodiment examples of this present that may be executed. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the spirit and scope of the present invention. In addition, it is to be understood that the position or arrangement of individual elements within each disclosed embodiment may be modified without departing from the spirit and scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

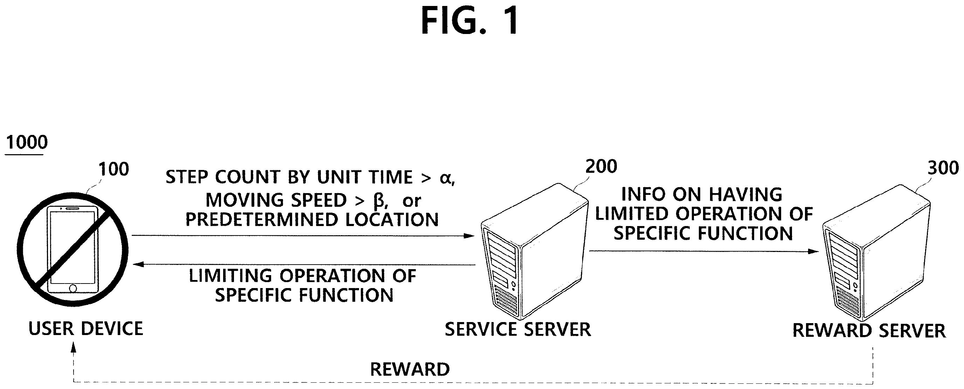

Fig. 1 is a conceptual drawing schematically illustrating an operation of a system for limiting an operation of a function of a user device 100 in accordance with one example embodiment of the present invention.

By referring to Fig. 1, a system 1000 for limiting the operation of the function of the user device in accordance with one example embodiment of the present invention may include the user device 100, a service server 200, and a reward server 300. However, as explained below, a service for limiting the operation of the function may be provided even without some part, e.g., the service server, of its configuration. For example, a function of the service server 200 which will be explained below could also be implemented by being included in the reward server 300, without any separate service server.

First of all, if at least some of information on a step count by unit time of a user carrying the user device 100, on at least one location of the user device 100, and on at least one moving speed of the user device 100 is acquired, and then if at least one of the step count by unit time and the moving speed is determined as exceeding its corresponding threshold, e.g., if the step count by unit time > α or the moving speed > β, or if the location of the user device 100 is determined as at least one of predetermined locations, the user device 100 may transmit the information to the service server 200. For example, if the location of the user device 100 is in a crosswalk zone or the moving speed thereof exceeds its corresponding threshold, the user device 100 may transmit the information to the service server 200. Instead, it could also be implemented that the user device 100 provides its location information or its moving speed information to the service server 200 so that the service server 200 can determine the location or the moving speed of the user device 100. Further, as explained below, if the user device 100 receives identification information from at least one beacon, the user device 100 may support the service server 200 to determine the location or the moving speed by transmitting the received identification information of the beacon to the service server 200.

If the step count by unit time or the moving speed is determined as exceeding its corresponding threshold, e.g., if the step count by unit time > α or the moving speed > β, or the location of the user is determined as at least one of the predetermined locations, the service server 200 may support the user device 100 to limit the operation of a specific function of the user device 100. In other words, if the step count by unit time or the moving speed is determined as exceeding its corresponding threshold or the location of the user is determined as at least one of the predetermined locations, the service server 200 may send a command for limiting the operation of the specific function to the user device 100 to thereby limit the operation of the specific function. In the aforementioned example, if the user device 100 is in the crosswalk zone or the moving speed thereof exceeds its corresponding threshold, the service server 200 may send a command for stopping an operation of a game app or a web browser running in the user device 100 to the user device 100. In this case, the service server 200 may transmit information on having limited the operation of the specific function, i.e., information on a history of limiting the operation of the specific function, to the reward server 300.

However, as explained below, the present invention may be implemented without the service server 200. In this case, if the step count by unit time or the moving speed is determined as exceeding its corresponding threshold or the location of the user is determined as at least one of the predetermined locations, the user device 100 may limit the operation of its specific function through a preset app installed therein. Meanwhile, it is also possible to limit the operation of the specific function directly by using an operating system.

After that, the user device 100 may transmit the information on having limited the operation of the specific function to the reward server 300.

Meanwhile, the preset app cannot be deleted arbitrarily by the user, and if there is no record of having limited the operation of the specific function for a certain period of time, e.g., 3 days, the service server 200 may determine that a problem has occurred, such as the preset app being deleted due to replacement of a motherboard of the user device 100, and send a confirmation message to the user device 100. Besides, if there is no record for having limited the operation of the function for a longer time, e.g., at least 7 days, it may send a message to the user for confirming whether the user has terminated the service or not.

The reward server 300 may acquire the information on having limited the operation of the specific function and create reward information for the user by referring to a degree of having limited the acquired operation of the specific function. For example, if the user does not use the user device 100 for a certain period of time while walking, the reward server 300 may award mileage. This will be explained later in more detail.

As such, if the user is located in one of the predetermined locations or is moving at the moving speed exceeding its corresponding threshold, the present invention may provide for safety by limiting the operation of the specific function of the user device 100 and guide users to voluntarily participate in the service by giving a reward corresponding to the history of having limited the operation thereof.

A technical configuration and operation of the present invention will be explained below in more detail.

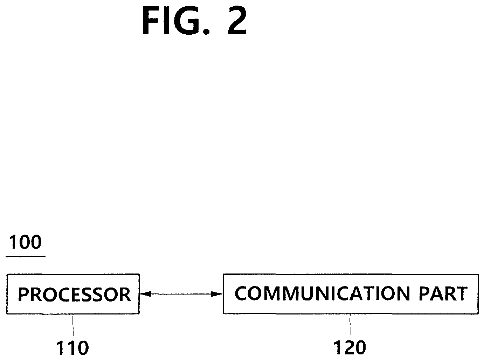

Fig. 2 is a block diagram schematically illustrating a configuration of the user device in accordance with one example embodiment of the present invention.

By referring to Fig. 2, the user device 100 in accordance with one example embodiment of the present invention may include a processor 110 and a communication part 120.

Herein, the user device 100 may be a mobile device that performs communication with other devices connected to a network, may be capable of inputting and outputting data, and may be one of a smartphone, smart glasses, a smart watch, a laptop, a tablet PC, a wearable device, and a cellular phone.

The processor 110 may be configured to execute or limit the specific function of the user device 100. More specifically, if the at least some of information on the step count by unit time of the user, on the at least one location of the user device 100 and on the at least one moving speed of the user device 100 is acquired, and then if at least one of the step count by unit time and the moving speed is determined as exceeding its corresponding threshold, or if the location of the user device is determined as at least one of the predetermined locations, the processor 110 may limit the operation of the specific function of the user device 100.

Herein, the information on the step count by unit time may be obtained by using information acquired from a motion sensor, e.g., a gyroscope or an accelerometer, of the user device 100 or of a wearable device connected thereto. Herein, the wearable device may be a device that is worn on a body and may communicate with the user device 100, and may include smart glasses, a smart watch, a wearable band, gloves, a capsule in a body, and any other wearable devices.

Besides, the information on the location or the moving speed of the user device 100 may be obtained by using information acquired from at least one of (i) a GPS sensor thereof, (ii) at least one beacon within a certain distance from the user device 100, (iii) a transmission of a vehicle, and (iv) an electronic control unit, i.e., ECU, in the vehicle. If the information on the location or the moving speed of the user device 100 is obtained by using the transmission operating mode of the vehicle upon a gear shift except parking or the information acquired from the ECU, then limiting the operation of the function occurs in the user device 100 in the vehicle, as explained below.

The processor 110 may perform a function of controlling data flow in the communication part 120 and another configuration of the user device 100, to be explained later. In other words, the processor 110 controls the communication part 120 and said another configuration to perform its unique functions by controlling the data flow among individual components of the user device 100.

The processor 110 may include a configuration of hardware such as a micro processing unit (MPU), a central processing unit (CPU), cache memory, and data bus. In addition, it may further include a software configuration of an operating system and an app which functions for a particular purpose.

The communication part 120 may transmit the information on having limited the operation of the specific function to the reward server 300, to thereby allow a reward to be provided to the user by referring to the degree of having limited the operation, or support the service server 200 to transmit the information on having limited the operation of the specific function to the reward server 300 by transmitting the identification information of the beacon to the service server 200 as explained below.

More detailed explanation on example embodiments of limiting the function of the user device 100 by using the beacon, in separate cases that the user is walking and that the user is driving a vehicle, will be given. In each case, as explained below, the service server 200 and the reward server 300 may be configured as integrated or separated.

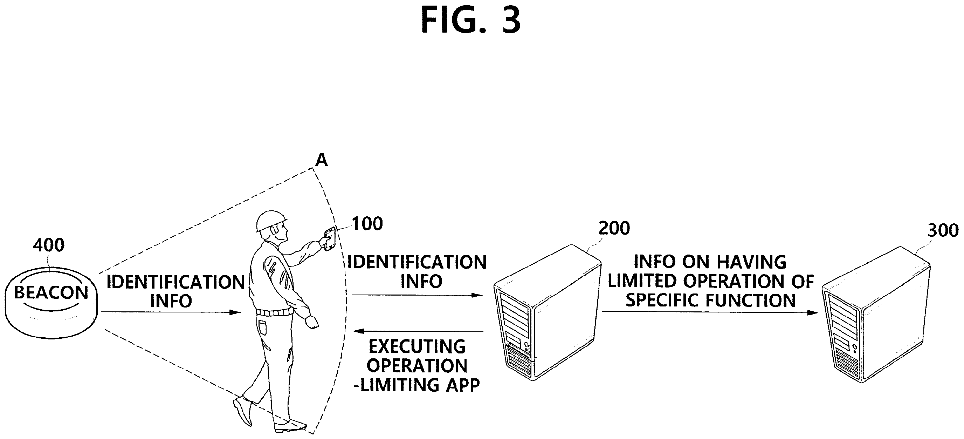

Fig. 3 is a drawing illustrating an example embodiment of limiting the operation of the function of the user device while the user is walking, based on information on the location or the moving speed of the user device by using the beacon.

By referring to Fig. 3, if the user device 100 receives identification information from at least one beacon 400 within a certain distance A from the at least one beacon 400, the user device 100 may determine the location or the moving speed thereof. In other words, as illustrated in Fig. 3, if the user device 100 is placed within the certain distance from the beacon 400, the user device 100 may receive the identification information from the beacon 400, and the communication part 120 may transmit the received identification information to the service server 200. The beacon may be a near field communication device that sends a message to the user device 100 within a range between 0.5 m and 70 m. To receive the identification information from the beacon 400, the Bluetooth function of the user device 100 may be kept on. The service server 200 may identify the beacon 400 through the received identification information and identify the location of the user device 100 by referring to information on the identified location of the beacon 400. If the user device 100 receives identification information from multiple beacons 400 by turns and transmits the identification information to the service server 200, the service server 200 may determine the moving speed of the user device 100 by referring to (i) information on locations of the multiple beacons and (ii) information on a time when the identification information has been received.

Herein, if the step count by unit time or the moving speed is determined as exceeding its corresponding threshold or the location of the user device 100 is determined as the at least one of the predetermined locations, the service server 200 may support the user device 100 to limit the operation of its specific function. In other words, the service server 200 may send a command for instructing the user device 100 to run a preset app to the user device 100, to thereby limit an operation of another app or another function.

Meanwhile, if the service server 200 is not separately provided, the user device 100 may determine the location or its moving speed on its own. That is, if the user device 100 receives the identification information from the at least one beacon 400, the processor 110 of the user device 100 may identify the at least one beacon 400 to thereby determine the location of the user device 100. Further, if the identification information is received from multiple beacons by turns, the processor 110 may determine its moving speed by referring to information on a time when it received the identification information and the location information of the multiple beacons.

Herein, if the step count by unit time or the moving speed is determined as exceeding its corresponding threshold or if the user device 100 is determined as in the at least one of the predetermined locations, the processor 110 of the user device 100 may limit the operation of its specific function by using a specific application installed in the user device 100. Clearly, an operating system, beside any specific applications, may limit the operation of the specific function of the user device.

Meanwhile, as stated above, the location or the moving speed of the user device 100 may be determined not only by using the beacon 400, but also by using a GPS function of the user device 100 or that of the wearable device connected thereto. In short, the location and the moving speed of the user device 100 may be determined through GPS information acquired from a GPS module (not illustrated) of the user device 100.

In addition to the beacon 400, a variety of near field communication technologies could be used.

Meanwhile, the communication part 120 of the user device 100, which is not illustrated in Fig. 3, may also transmit the identification information received from the beacon 400 to a beacon manager first (not illustrated). The beacon manager may manage the at least one beacon 400, and may determine the moving speed or the location of the user device 100 directly by receiving the identification information, or support the service server 200 to determine the moving speed or the location by transmitting the received identification information to the service server 200. If the beacon manager is capable of functioning also as the beacon, the beacon manager may replace the beacon, connect to the Internet, and monitor another beacon.

The communication part 110 of the user device 100 may transmit information on having limited the operation of the specific function to the reward server 300 to thereby allow a reward to be provided to the user by referring to the degree of having limited the operation of the specific function or support the service server 200 to transmit information on having limited the operation by transmitting the identification information of the beacon 400 to the service server 200.

An example embodiment of limiting the operation of the function of the user device 100 by recognizing a situation under which the user is driving a vehicle is explained.

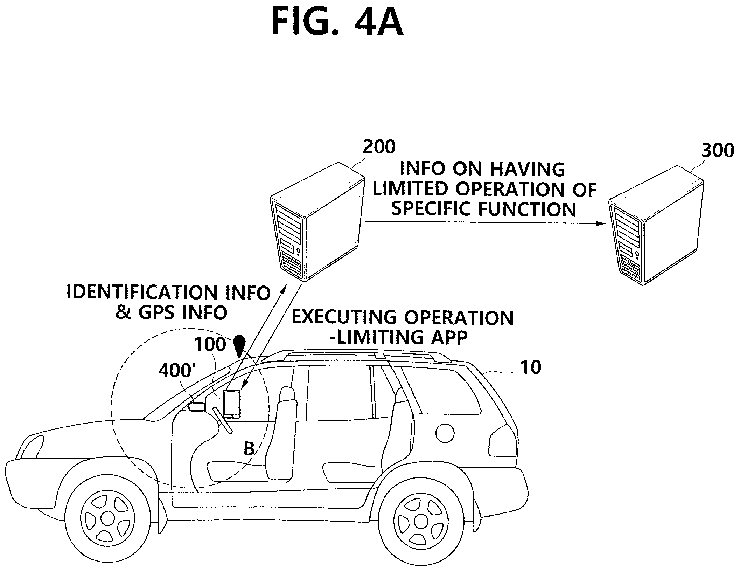

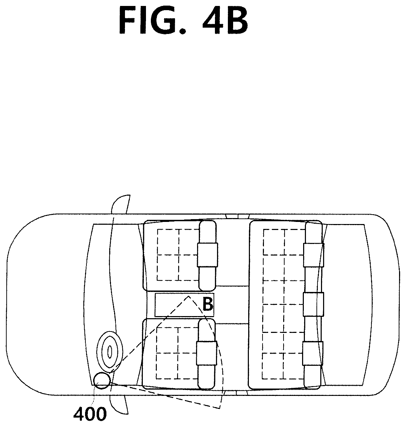

Fig. 4 is a drawing illustrating an example embodiment of limiting the operation of the function of the user device while the user is driving a vehicle based on information on the location or the moving speed of the user device by using the beacon.

By referring to Fig. 4, if the user device 100 is placed within a certain distance B from at least one beacon 400' in a vehicle 10, the operation of the function of the user device 100 may be limited. More specifically, if the user device 100 is placed within the certain distance B from the at least one beacon 400' in the vehicle 10, the communication part 120 may receive the identification information from the at least one beacon 400' and transmit the received identification information to the service server 200. The service server 200 may identify the beacon 400' through the received identification information and identify the location of the user device 100 in the vehicle, based on the information on the location of the identified beacon 400'. Clearly, as the case may be, the operation of the specific function of the user device 100 may be limited only when the user device 100 is placed within the certain distance B from the at least one beacon 400' in the vehicle 10, and at the same time, when the moving speed of the user device 100 exceeds its corresponding threshold. Meanwhile, the processor 110 may acquire information on the location of the user device 100 by initiating the GPS function and transmit the location information to the service server 200 through the communication part 120.

In addition, if the user device 100 receives the identification information by turns from the multiple beacons (not illustrated) outside of the vehicle 10 and transmits the identification information to the service server 200, then the service server 200 may determine the moving speed of the user device 100 by referring to the information on the locations of the multiple beacons and information on a time when their identification information has been received. As another example, if the processor 110 of the user device 100 activates the GPS function and acquires the location information of the user device 100, the moving speed of the user device 100 or of the vehicle may be determined based on the location information. Moreover, as explained above, the moving speed may also be determined by using information acquired from a transmission operating mode of the vehicle 10 upon a gear shift except parking or from the ECU in the vehicle 10. In this case, a separate IoT device may be installed in the vehicle 10.

For example, if the user device 100 is placed within the certain distance B from the at least one beacon 400' in the vehicle 10, and the moving speed of the user device 100 exceeds its corresponding threshold, the service server 200 may limit the operation of the specific function of the user device 100. However, if at least one of the two conditions is not satisfied, e.g., if the user device 100 is far away more than the certain distance B from the at least one beacon 400' in the vehicle 10 or the moving speed of the user device 100 falls below its corresponding threshold, the limitation of the operation of the specific function may be lifted. While the user is driving the vehicle, usage of all functions may be limited, except particular functions, e.g., such as navigating, receiving voice calls, sending emergency and rescue calls, listening to radio, etc.

Meanwhile, if the service server 200 is not separately provided, the user device 100 may also determine the location or the moving speed on its own. In other words, if the user device 100 receives the identification information from the at least one beacon 400' in the vehicle 10, then the processor 110 of the user device 100 may identify the at least one beacon 400' to thereby determine the location in the vehicle 10 of the user device 100. Besides, if the identification information is received by turns from the multiple beacons installed outside of the vehicle 10, the processor 110 may determine the moving speed of the user device 100 by referring to the information on a time when the information on the locations and the identification information of the multiple beacons is received. Clearly, in this case, as explained above, it may also determine the location and the moving speed through the GPS module of the user device 100.

Herein, if the user device 100 is determined as placed within the certain distance B from the at least one beacon 400' in the vehicle 10 and its moving speed is determined as exceeding its corresponding threshold, the processor 110 may limit the operation of the specific function of the user device 100 through the preset app installed therein. Certainly, the limitation of the operation of the specific function may be performed at a level of an operating system.

Although not illustrated in Fig. 4, the communication part 120 of the user device 100 may transmit the identification information received from the beacon 400' in the vehicle 10 to the beacon manager first (not illustrated). The beacon manager may manage the at least one beacon 400', receive the identification information to thereby determine directly the moving speed or the location of the user device 100, or support the service server 200 to determine the moving speed or the location by transmitting the received identification information to the service server 200.

Meanwhile, if the user device 100 is determined as placed within the certain distance from the at least one beacon 400' in the vehicle 10 and if its moving speed is determined as exceeding its corresponding threshold, the operation of the specific function of the user device 100, only of the identified user, may be limited.

One of simple methods for identifying the user may be to match and register one user device of each of at least one user who uses the vehicle 10 with the beacon 400'. In other words, each user device may be matched with the at least one beacon 400'. In this case, an operation of a function of all of the user devices matched with the same beacon 400' may be limited.

Instead, information on the vehicle, a driver, the user device 100 of the driver, etc. may be pre-registered with the service server 200, and if the vehicle 10 and the driver are identified by referring to the identification information of the beacon 400' and the identification information of the user device 100 received from the user device 100 of the driver, the operation of the specific function of the user device 100 may be limited.

As such, the identification of the user could be made by referring to the identification information of the user device 100, but also by referring to the identification information acquired as a result of recognizing the user by a separate user recognition apparatus (not illustrated) installed in the vehicle 10. For example, if the user's face is recognized through a dash cam installed in the vehicle 10, the identification information corresponding to the recognized face may be transmitted to the service server 200 or to the user device 100 to be used for identifying the user. In addition, in this case, the moving speed of the vehicle 10 may be determined through the GPS function of the dash cam.

Meanwhile, if information on another user of the vehicle 10 is registered, as necessary, with the service server 200 or the user recognition apparatus, said another user may also be identified. For example, information on the user device 100 of at least one family member who shares the vehicle 10 may be registered. However, the information may be inputted and stored in a database. As the case may be, it could also be implemented that information on a main user of the vehicle 10 may be set as default and another user may be changeable.

In addition, the beacon 400' may also designate a detecting range within which the identification information may be transmitted to the user device 100. In other words, given a structure of the vehicle 10, as illustrated in Figs. 4A and 4B, the operation of the function of the user device 100 only in a driver's seat may be limited while driving. The limitation of the operation may differ per user by distinguishing users' locations according to transmission signal strength or by distinguishing the users with multiple beacons. To prevent arbitrary re-location of the beacon 400', if the beacon 400' is detected as removed, the beacon 400' could be set not to work.

If a residual charge value of a battery falls below a prescribed value or at a certain interval, information on the residual charge value is transmitted from the at least one beacon 400 and 400' to the user device 100 or the service server 200, to thereby give out a battery replacement notice.

The operation of the specific function of the user device 100 may be limited differently according to at least one of (i) age of the user carrying the user device 100, (ii) the location of the user device 100, (iii) an accident record of the user, (iv) a characteristic of the user, and (v) a type of an app, as a subject to be limited, running in the user device 100.

More specifically, if the user is young or old, the threshold of the moving speed could be lowered or the degree of limiting the operation of the function may be increased. By using an IoT infrastructure, e.g. a beacon, a limited area may be designated where the operation of the function of the user device 100 of the user walking is limited. Herein, a relatively dangerous area may be designated as the limited area. For example, when the user of the user device 100 passes a crosswalk zone, the operation of the specific function of the user device 100 may be limited, especially in a crosswalk, e.g., an eight-lane road, with a high risk of accidents. As another example, when the user walks in a vehicle-free street, such limitation may be lifted. As still another example, the operation of the specific function of the user device 100 may be limited at a zone where there are stairs. As still yet another example, the limitation of the use may be applied to personnel of a public institution, a school, a hospital, and a specific building. Further, the operation of the specific function of the user device 100 may be limited in a certain distance from a do-not-cross-line for boarding a train, or a subway. Also, the degree of limiting the use may be varied according to the accident history occurred while walking due to the use of the user device 100. Besides, while the user is walking, usage of all functions may be limited, except particular functions, for example, including navigating, receiving voice calls, sending emergency and rescue calls, listening to radio, etc.

Meanwhile, if the degree of limiting the operation of the specific function of the user device 100 is varied by individual users, a policy may be remotely set by using mobile device management, i.e., MDM.

Further, the record of having limited operations of the specific function by individual users may be inquired. For example, one may inquire accumulated record of having limited operations of the specific function by date, time, and interval.

A configuration and operation of the service server 200 will be explained below. The descriptions similar to the explained above will be omitted.

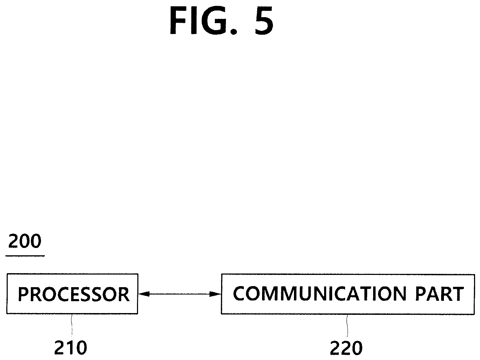

Fig. 5 is a block diagram illustrating a configuration of the service server in accordance with one example embodiment of the present invention.

By referring to Fig. 5, the service server 200 in accordance with one example embodiment of the present invention includes a processor 210 and a communication part 220.

The processor 210 may limit the operation of the specific function of the user device 100. Specifically, if at least some of information on a step count by unit time of the user carrying the user device 100, on at least one location of the user device 100, and on at least one moving speed of the user device 100 is acquired, and then if at least one of the step count by unit time and the moving speed is determined as exceeding its corresponding threshold or if the location of the user device 100 is determined as at least one of predetermined locations, the processor 210 may support the user device 100 to limit the operation of the specific function of the user device 100.

As explained above, if the processor 210 receives from the user device 100 (i) the identification information sent from at least one beacon 400 to the user device 100 when the user device 100 is placed within a certain distance A from the at least one beacon 400 or (ii) GPS information of the user device 100, while the user is walking, then the processor 210 may determine the location of the user device 100 or the moving speed thereof based on the identification information or the GPS information.

In addition, if the user device 100 is determined as placed within the certain distance B from at least one beacon 400' in the vehicle 10 and the moving speed of the user device 100 is determined as exceeding its corresponding threshold, the processor 210 may support the user device 100 to limit the operation of the specific function of the user device 100.

In particular, the processor 210 may learn a moving route of the user device 100 by time through accumulated location information or usage logs of the user device 100, may create user customized information corresponding to the learned moving route of the user device 100 if a particular time condition is met, and may provide the user device or another device with the created user customized information via the communication part 220. The moving route of the user device by time 100 may be accumulated and recorded in a database. Besides, the processor 210 may provide statistics by analyzing such data.

Herein, the user customized information may include at least some of information on traffic of the moving route, weather, an event, and advertising.

For example, the processor 210 may learn a pattern of commuting time and that of movement of the user, and when the commuting time is near, the processor 210 may provide information on traffic, weather, etc. Specifically, the processor 210 may initiate a navigation function in real-time to provide traffic condition, a route, etc. Besides, it may also provide information such as an event or advertising of a store on the moving route. Such information may be provided in a form of audio or visual in graphics.

In addition, the processor 210 may calculate mileage of the vehicle 10 the user is riding by referring to accumulated location information by time of the user device 100 and provide information on advertisement of a replaceable part of the vehicle whose replacement is required according to the mileage if a time condition is met, e.g., if it is time to replace the replaceable part of the vehicle with new one.

The processor 210 may perform a function of controlling data flow in the communication part 220 and another configuration. In other words, the processor 210 controls data flow among components of the service server 200 to perform their unique functions in the communication part 220 and said another configuration.

The processor 210 may further include a configuration of hardware including a micro processing unit (MPU), a central processing unit (CPU), cache memory, data bus, etc. In addition, it may further include a software configuration of an operating system and an application which functions for a particular purpose.

The communication part 220 may transmit the information on having limited the operation of the specific function to the reward server 300 to thereby allow a reward to be provided to the user by referring to the degree of having limited the operation of the specific function.

A configuration and an operation of the reward server 300 in accordance with a variety of example embodiments of the present invention will be explained below.

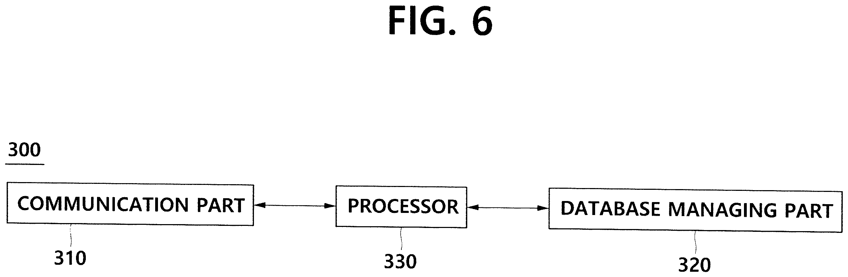

Fig. 6 is a block diagram illustrating a configuration of the reward server in accordance with one example embodiment of the present invention.

By referring to Fig. 6, the reward server 300 in accordance with one example embodiment of the present invention may include a communication part 310, a database managing part 320 and a processor 330.

The communication part 310 may be configured to acquire information on having limited the operation of the specific function of the user device 100. Specifically, if at least some of information on a step count by unit time of the user carrying the user device 100, on at least one location of the user device 100, and on at least one moving speed of the user device 100 is acquired, and then if at least one of the step count by unit time and the moving speed is determined as exceeding its corresponding threshold or if the location of the user device 100 is determined as at least one of predetermined locations and thereby the operation of the specific function of the user device 100 is limited, the communication part 310 may acquire the information on having limited the operation of the specific function.

The database managing part 320 may be configured to create and store information on the reward to be provided to the user of the user device 100 by referring to the degree of having limited the operation of the specific function. In this case, the reward may be at least some of (i) a discount of insurance premium or communication expense, (ii) an additional service, (iii) donation under a name of a customer, (iv) a ranking of the reward, (v) additional quota of data usage, and (vi) a coupon.

The processor 330 may perform a function of controlling data flow between the communication part 310 and the database managing part 320. In other words, the processor 330 controls data flow among individual components of the reward server 300, the communication part 310, and the database managing part 320 to perform their unique functions in the communication part 310 and the database managing part 320.

The processor 330 may include a configuration of hardware including a micro processing unit (MPU), a central processing unit (CPU), cache memory, data bus, etc. Furthermore, it may further include a software configuration of an operating system and an application which functions for a particular purpose.

First of all, the reward by limiting the operation of the specific function of the user device 100 while the user is walking will be explained.

In accordance with the present invention, an incentive program may be managed, connected with an insurance company, e.g., a life insurance or an accident insurance company, etc., which operates the reward server 300. For example, a total time duration of limiting the operation of the specific function of the user device 100 while the user is walking may be converted to mileage to raise interest of customers and to motivate them for continuous voluntary participation. For example, one mile for every 10 minutes may be deposited and a value of 10 cents for every 10 miles may be awarded. As such, the incentive may be awarded to a customer at a fixed rate, or a reward may be given in a form of donation to a social contribution fund, e.g., a support fund for car accident victims. In this case, the user may be prevented from changing a mode of limiting the operation of the specific function of the user device 100 to prevent the user from arbitrarily manipulating it.

Besides, the ranking of the reward may be aggregated for the whole member and/or each of groups in the whole member, where the groups are divided by age, by region, by Alma Mater, or by company. In this case, the information on the ranking of the reward may be displayed in real-time with corresponding personal information.

In addition, the database managing part 320 of the reward server 300 may create the reward information by referring to at least some of a characteristic of the user and a contract between the user and an operator of the reward server 300.

For example, allotting the mileage may vary according to customers' characteristics. For this purpose, the user device 100 may be linked with a database of user information. In addition, mileage may be accumulated in the aforementioned method and upon renewal of an insurance policy for a next term or a following year, a temporary discount of insurance premium may be provided.

Besides, the communication part 310 of the reward server 300 may provide the created reward information to the user device 100 or the service server 200, to thereby allow the created reward information to be confirmed through the user device 100 or another device. For example, whenever limiting the operation of the specific function of the user device 100 is lifted, the accumulated mileage information may be provided not only through an app of the user device 100 but also whenever the user wants.

In addition, the communication part 310 may also support another reward server to allow the reward to be provided to the user by transmitting the created reward information to said another reward server. For example, the accumulated mileage as shown above may be converted into a discount coupon, etc. of a business partner in another business field, for a certain rate or a certain time interval.

Besides, in the same way as shown in the aforementioned example, a mobile service provider may attract customers, and then its mobile service agencies may take in subscription to the mobile service and install a beacon throughout the country. In this case, as log data on limiting the operation of the specific function of the user device 100 is collected and analyzed, a more reliable operation may be achieved. Besides, if the mileage is provided as data quota for using the Internet, the mobile service may have a high benefit-to-cost ratio and acquire expertise in implementing and operating the service in accordance with the present invention. Furthermore, compared to a service operated by a company in another business field, e.g., an insurance company, the mobile service provider may have an advantage of establishing a public image of putting much value on safety of customers in using the user device 100. Besides, if the service is used under a special phone plan, then its users may be given a discount.

However, a subject of giving rewards to users for using the service in the present invention is not limited to an insurance company or a mobile service provider.

Next, in the case of limiting the operation of the specific function of the user device while the vehicle 10 is being operated, a similar type of reward may also be granted.

First of all, a user may easily apply for a reward service with a special plan on safety of a driver when subscribing to the mobile service. Also, a clerk at a mobile service store may directly install a beacon in the vehicle 10 to minimize additional wages that may be incurred.

In addition, just like the aforementioned example embodiment of a reward for limiting the use of the user device while its user is walking, the time duration of limiting the operation of the specific function of the user device 100 during driving may be converted into mileage. For example, 10 miles for every 10 minutes may be deposited and a value of 10 cents for every 10 miles may be awarded. As such, an incentive may be given to a customer at a fixed rate and the reward may be given in a form of donation to a social contribution fund, e.g., a support fund for car accident victims. Besides, the user may be prevented from changing a mode of limiting the operation of the specific function of the user device 100 to prevent the user from arbitrarily manipulating it.

Similar to the aforementioned example, the database managing part 320 of the reward server 300 may create the reward information by referring to at least some of a characteristic of the user and a contract between the user and the operator of the reward server 300. For example, allotting the mileage may vary according to the customer's vehicle characteristics including business use and non-business use. For this purpose, an app of the user device 100 may be linked with the database for user information. Moreover, mileage may be accumulated as shown in the aforementioned method and upon renewal of an insurance policy for a next term or following year, a temporary discount of insurance premium may be provided.

In addition, the communication part 310 of the reward server 300 may provide the created reward information to the user device 100 or the service server 200, to allow the created reward information to be confirmed through the user device 100 or another device. For example, whenever limiting the operation of the specific function of the user device 100 is lifted, the accumulated mileage information may be inquired not only through the user device 100 but also whenever the user wants.

In addition, the communication part 310 may also support another reward server to allow the reward to be provided to the user by transmitting the created reward information to said another reward server. For example, the accumulated mileage as shown above may be converted into a discount coupon, etc. of a business partner in another business field, for a rate of a certain size or a certain time interval. There may be various business partners, but if they are in a field of vehicle or health, a synergy effect may be brought upon. The business partners may be auto mechanics or tire management companies.

The reward may be awarded to a user or to multiple users as a whole according to the user's selection. In addition, vehicle information linked with car insurance, personal information, and information on the user device 100 may be registered with the service server 200 or the reward server 300. In this case, information on the user device 100 of at least one family member who shares the vehicle 10 may be additionally registered, and the record of limiting the operation of the function of the user device of the additional family member entitled to drive may be integrated into total mileages.

Besides, in the same way as shown in the aforementioned example, a mobile service provider may attract customers, and its mobile service agencies may take in subscription to the mobile service and install a beacon throughout the country. In this case, as log data on limiting the operation of the specific function of the user device 100 is collected and analyzed, more reliable operation may be achieved. Besides, if the mileage is provided as data quota for using the Internet, the mobile service may have a high benefit-to-cost ratio and acquire expertise in implementing and operating the service in accordance with the present invention. Furthermore, compared to a service operated by a company, e.g., an insurance company, in another business field, the mobile service provider may have an advantage of establishing a public image of putting much value on safety of customers in using the user device 100. Besides, if the service is used under a special phone plan, then its users may be given a discount. In this case, the service may perform a role of managing and verifying whether the user has complied with the regulations and laws on prohibiting the user from using the user device 100 while driving, and the government may subsidize the mobile service providers to discount a communication expense.

Besides, the service may publish the distance travelled on a safety mode and ranking in real-time on the Internet and allow them to be shared among user devices. This may motivate users and guarantee transparent rewards.

A subject of giving rewards to users for using the service in the present invention is not limited to an insurance company or a mobile service provider.

The use of the present invention may be mandated for public transports such as city buses, trains, subways, and taxis, and their drivers, for public safety and properties protection. Non-use of the service in the present invention may be punishable by fine, suspension of a business, revocation of a business license, or prevention from buying an insurance.

The objects of the technical solution of the present invention or parts contributing to the prior art can be implemented in a form of executable program command through a variety of computer means and can be recorded to computer readable recording media. The computer readable media may include solely or in combination, program commands, data files, and data structures. The program commands recorded to the media may be components specially designed for the present invention or may be usable to a skilled person in a field of computer software. Computer readable record media include magnetic media such as hard disk, floppy disk, and magnetic tape, optical media such as CD-ROM and DVD, magneto-optical media such as floptical disk and hardware devices such as ROM, RAM, and flash memory specially designed to store and carry out programs. Program commands include not only a machine language code made by a compiler but also a high-level code that can be used by an interpreter etc., which is executed by a computer. The aforementioned hardware devices can work as more than a software module to perform the action of the present invention and they can do the same in the opposite case.

The present invention may have the following effects for each subject:
First of all, the users of the service in accordance with the present invention may keep themselves and their families safe and may receive rewards such as monetary benefits and may also comply with the traffic regulations vigorously.

The mobile service providers or insurance companies, etc. may have an increased opportunity to attract customers while investing less. Besides, cooperation and information sharing with business partners such as auto mechanics or insurance companies may generate revenues and they may help the companies to establish good public images related to corporate social responsibility, i.e., CSR, by improving public safety and increasing compliance with laws.

The business partners may be insurance companies for automobiles or accidents in connection with mobile service providers. In this case, when a user subscribes to a special plan of limiting usage of the user device while driving and an insurance-connected plan, the user may get a discount on insurance premium and this may help them attract customers and make the corporate's public image better.

Herein, the mobile service providers may take a commission per insurance policy and provide information on those who have terminated the special plan in mid-term to insurance companies, in which case a consent of a customer may be required for providing their information upon subscription.

Besides, the insurance companies may vary clauses of insurance policies by user, considering whether the users subscribed to the special plan.

In addition, information on driving hours of a vehicle may be provided to an auto mechanic with the customer's prior consent. In this case, by converting the driving hours to a distance, the business partner may do promotion activities such as providing a discount coupon at a time when a variety of parts of vehicles need to be replaced. In this case, the service may lead the user to a store near the main moving route of the vehicle and this may increase service usage. At the time, the mobile service provider may earn profit by providing information.

Upon cooperation with stores on the main moving route other than the mobile service providers and the insurance companies, individual business partners may increase possibility of attracting customers by providing marketing information such as discounts, special sales, etc. while the mobile service providers may profit from providing platforms or advertising.

In the case of public transports such as city buses, trains, subways, and taxis and their drivers, the present invention may allow the public transport companies to protect their properties and reduce costs by making customers and the drivers safe and may expect an effect of improving their public images for CSR. Herein, the mobile service providers may increase possibility of attracting new drivers and customers.

The present invention has an effect of providing a technical plan for limiting use of a mobile device while a user is walking or driving, and providing a plan for guiding the user to voluntarily participate in the service.

The present invention has another effect of providing the user customized information, by learning information on accumulated logs of the mobile device while the user is walking or driving and creating the user customized information based thereon.

As seen above, the present invention has been explained by specific matters such as detailed components, limited embodiments, and drawings. While the invention has been shown and described with respect to the preferred embodiments, it, however, will be understood by those skilled in the art that various changes and modification may be made without departing from the spirit and scope of the invention as defined in the following claims.

Accordingly, the thought of the present invention must not be confined to the explained embodiments, and the following patent claims as well as everything including variants equal or equivalent to the patent claims pertain to the category of the thought of the present invention.

## Claims

1. A method for limiting at least part of functions of a user device of a user when the user is walking or driving, comprising steps of:
(a) the user device, limiting an operation of its specific function if at least some of information on a step count by unit time of the user carrying the user device, on at least one location of the user device, and on at least one moving speed of the user device is acquired, and then if at least one of the step count by unit time and the moving speed is determined as exceeding its corresponding threshold or if the location of the user device is determined as at least one of predetermined locations; and
(b) the user device transmitting information on having limited the operation of the specific function to a reward server or supporting a service server to transmit the information on having limited the operation of the specific function to the reward server, to thereby determine a reward to be provided to the user by referring to a degree of having limited the operation.

2. The method of Claim 1, wherein the information on the step count by unit time is obtained by using information acquired from a motion sensor of the user device or of a wearable device connected thereto and the information on the location or the moving speed is obtained by using information acquired from at least one of (i) a GPS sensor thereof, (ii) at least one beacon within a certain distance from the user device, (iii) a transmission operating mode of a vehicle, and (iv) an ECU in the vehicle.

3. The method of Claim of Claim 2, wherein, information on a residual charge value of a battery of the at least one beacon is transmitted to the user device or the service server (i) at a certain interval or (ii) if the residual charge value falls below a prescribed value.

4. The method of Claim 1, wherein, at the step of (a), if the user device receives identification information from at least one beacon by being placed within a certain distance from the at least one beacon, the user device determines the location or the moving speed.

5. The method of Claim 1, wherein, if at least one of the step count by unit time and the moving speed is determined as exceeding its corresponding threshold or the location is determined as the at least one of the predetermined locations, the user device limits the operation through a preset app installed therein.

6. The method of Claim 1, wherein, at the step of (a), if the user device is determined to be in a certain distance from at least one beacon in a vehicle and if the moving speed is determined as exceeding its corresponding threshold, the operation of the specific function of the user device is limited.

7. The method of Claim 6, wherein, if identification information from the at least one beacon is received, the user device initiates its GPS function.

8. The method of Claim 6, wherein, even though (i) the user device is determined to be within the certain distance from the at least one beacon and (ii) the moving speed is determined as exceeding its corresponding threshold, the operation of the specific function is limited only when the user is identified.

9. The method of Claim 8, wherein the user is identified by using identification information acquired from the user device or a user recognition apparatus installed in the vehicle.

10. The method of Claim 9, wherein, if information on another user of the vehicle is registered with the service server or the user recognition apparatus, the said another user is also identified.

11. The method of Claim 1, wherein the operation of the specific function is limited differently according to at least one of (i) age of the user, (ii) the location of the user device, (iii) an accident record of the user, (iv) a characteristic of the user, and (v) a type of an app, as a subject to be limited, running in the user device.

12. A method for limiting at least part of functions of a user device of a user when the user is walking or driving, comprising steps of:
(a) a reward server, if at least some of information on a step count by unit time of the user carrying the user device, on at least one location of the user device and on at least one moving speed of the user device is acquired, and then if at least one of the step count by unit time and the moving speed is determined as exceeding its corresponding threshold, or if the location of the user device is determined as at least one of predetermined locations so that an operation of a specific function of the user device is limited, acquiring information on having limited the operation of the specific function; and
(b) the reward server creating reward information for the user by referring to a degree of having limited the operation acquired at the step of (a).

13. The method of Claim 12, further comprising a step of:
(c) the reward server providing the user device or a service server with the reward information to thereby support the user device or other devices to confirm the reward information.

14. The method of Claim 12, wherein the reward server creates the reward information by referring to at least some of a characteristic of the user and a contract between the user and an operator of the reward server.

15. The method of Claim 12, wherein the reward server instructs another reward server to allow a reward to be provided to the user by transmitting the reward information to said another reward server.

16. The method of Claim 12, wherein the reward server is a server of an insurance company or a mobile service provider, and wherein a reward is at least some of (i) a discount of insurance premium or communication expense, (ii) an additional service, (iii) donation under a name of a customer, (iv) a ranking of the reward, (v) additional quota of data usage, and (vi) a coupon.

17. The method of Claim 12, wherein the reward is provided for each user or for multiple users by referring to the user's selection.

18. A method for limiting at least part of functions of a user device of a user when the user is walking or driving, comprising steps of:
(a) a service server supporting the user device to limit an operation of its specific function if at least some of information on a step count by unit time of the user carrying the user device, on at least one location of the user device and on at least one moving speed of the user device is acquired, and then if at least one of the step count by unit time and the moving speed is determined as exceeding its corresponding threshold or if the location of the user device is determined as at least one of predetermined locations; and
(b) the service server transmitting information on having limited the operation of the specific function to a reward server or supporting the user device to transmit the information on having limited the operation to thereby allow a reward to be provided to the user by referring to a degree of having limited the operation.

19. The method of Claim 18, wherein, at the step of (a), if the service server receives from the user device at least one of (i) identification information sent from at least one beacon to the user device when the user device is placed within a certain distance from the at least one beacon, and (ii) GPS information of the user device, the service server determines the location of the user device or the moving speed.

20. The method of Claim 18, wherein, if at least one of the step count by unit time and the moving speed is determined as exceeding its corresponding threshold, or the user device is determined as located in the predetermined location, the service server supports the user device to limit the operation of its specific function.

21. The method of Claim 18, wherein, at the step of (a), if the user device is determined to be located within a certain distance from at least one beacon in a vehicle or the moving speed is determined as exceeding its corresponding threshold, the service server supports the user device to limit the operation of its specific function.

22. The method of Claim 18, wherein the service server learns a moving route of the user device by time through accumulated location information of the user device and provides for user customized information corresponding to the moving route if a particular time condition is met.

23. The method of Claim 22, wherein the user customized information includes at least some of information on traffic of the moving route, weather, an event, and advertising.

24. The method of Claim 18, wherein the service server calculates mileage of the user's vehicle through the accumulated location information by time and provides information on advertisement of a replaceable part of the vehicle whose replacement is required according to the mileage.

25. A user device for limiting at least part of functions of the user device of a user when the user is walking or driving, comprising:
a processor for limiting an operation of a specific function of the user device (i) if at least some of information on a step count by unit time of the user carrying the user device, on at least one location of the user device, and on at least one moving speed of the user device is acquired, and then (ii) if at least one of the step count by unit time and the moving speed is determined as exceeding its corresponding threshold or if the location of the user device is determined as at least one of predetermined locations; and
a communication part for transmitting information on having limited the operation of the specific function to a reward server or supporting a service server to transmit the information on having limited the operation of the specific function to thereby allow a reward to be provided to the user by referring to a degree of having limited the operation.

26. A reward server for limiting at least part of functions of a user device of a user when the user is walking or driving, comprising:
a communication part for acquiring information on having limited an operation of a specific function (i) if at least some of information on a step count by unit time of the user carrying the user device, on at least one location of the user device and on at least one moving speed of the user device is acquired, and then (ii) if at least one of the step count by unit time and the moving speed is determined as exceeding its corresponding threshold, or if the location of the user device is determined as at least one of predetermined locations so that the operation of the specific function of the user device is limited; and
a database managing part for creating and storing reward information for the user by referring to a degree of having limited the operation of the specific function.

27. A service server for limiting at least part of functions of a user device of a user when the user is walking or driving, comprising:
a processor for supporting the user device to limit an operation of its specific function (i) if at least some of information on a step count by unit time of the user carrying the user device, on at least one location of the user device and on at least one moving speed of the user device is acquired, and then (ii) if at least one of the step count by unit time and the moving speed is determined as exceeding its corresponding threshold or if the location of the user device is determined as at least one of predetermined locations; and
a communication part for transmitting information on having limited the operation of the specific function to a reward server or supporting the user device to transmit the information on having limited the operation to thereby allow a reward to be provided to the user by referring to a degree of having limited the operation.
